# EUROPÄISCHE PATENTSCHRIFT

(11) **EP 1 457 248 B1**
(45) Veröffentlichungstag und Bekanntmachung des Hinweises auf die Patenterteilung: **13.02.2013**
(21) Anmeldenummer: 04100765.9
(22) Anmeldetag: 26.02.2004
(51) Int. Cl.: B01D 46/52

(54) **Luftfiltersystem**
Air filtration system
Système de filtre à air

(30) Priorität: 14.03.2003 DE 10311640
(43) Veröffentlichungstag der Anmeldung: 15.09.2004
(73) Patentinhaber: Mann + Hummel GmbH, 71638 Ludwigsburg (DE)
(72) Erfinder: Oelpke, Reinhard, 67376 Harthausen (DE); Schaerlund, Jukka, 76877 Offenbach (DE)

(56) Entgegenhaltungen:
- EP-A- 1 216 743
- EP-A- 1 364 695
- DE-U- 29 622 912
- US-A- 5 277 157
- US-A- 5 575 826

## Beschreibung

### Stand der Technik

Die Erfindung betrifft ein Luftfiltersystem für Nutzfahrzeuge nach dem Oberbegriff des Patentanspruchs 1.

Aus der US 5 575 826 A ist eine Luftfilterkonstruktion mit einem Vorabscheider, einer Filteranordnung und einer Austragsanordnung bekannt.

Aus der EP 1 364 685 A1 ist ein Filter mit einem Gehäuse, einem eine Aufnahmekammer verschließendem Deckel und einem herausnehmbaren Filterelement bekannt.

Aus der EP 1 216 743 A1 ist ein ovales Gehäuse mit einem ovalen Filterelement bekannt, mit einem Zyklonvorabscheider und eine Hauptfilterelement mit einem zickzackförmig gefalteten Filterelement.

Die Im Stand der Technik bekannten Luftfilteranlagen für Verbrennungsmotoren sind hauptsächlich in der Nähe des Motors, meist im Motorraum angeordnet. Jedoch wird es immer schwieriger die Luftfilteranlage in diesem Bereich anzuordnen, da der Bauraum, welcher hierzu zur Verfügung steht, immer kleiner wird. Insbesondere bei Nutzfahrzeugen, speziell bei Traktoren, ist der Platz durch die im Motorraum angeordneten Zusatzfunktionselemente, wie Hydraulik- und Pneumatikelemente, sehr gering und durch eine im Motorraum in der Nähe des Motors angeordnete Luftfilteranlage wird der Zugang zu diesen Zusatzsystemen behindert. Weiterhin liegt hier die Ansaugstelle oft im Schmutzbereich des Fahrzeuges, das heißt, dass so eine erhöhte Partikelbelastung des Luftfilters auftritt und die Standzeit des Luftfilters dadurch verringert wird. Die DE 79 02 819 schlägt hierzu ein Ansaugluftreinigungselement als Äußeres an den Aufbau eines Lastkraftwagens anbringbares Element vor, wobei das Element einen Vorfilter und Wasserabscheider, einen Zyklon und einen Luftfilter enthält. Diese Lösung ist jedoch individuell an den Aufbau der verschiedenen Lastkraftwagen gebunden und ist somit hinsichtlich der freien Platzierbarkeit stark gebunden und lässt sich in vielen Fällen, zum Beispiel bei landwirtschaftlichen Maschinen mit deren besonderen Aufbauten gar nicht nutzen.

Aufgabe der Erfindung ist es, die oben genannten Nachteile zu vermeiden und ein universell einsetzbares und anbringbares Luftfiltersystem zu schaffen, welches einfach aufgebaut ist und sehr variabel bei der Platzierung ist, jedoch weiterhin eine sehr gute Abscheideleistung ermöglicht. Diese Aufgabe wird durch die Merkmale des Patentanspruchs 1 gelöst.

### Vorteile der Erfindung

Das erfindungsgemäße Filtersystem zur Filterung von Ansaugluft einer Kraftmaschine, insbesondere Luftfilter für ein Nutzfahrzeug weist ein im wesentlichen röhrenförmiges Gehäuse auf. Dabei kann die Querschnittsform rund, oval, eckig oder kastenförmig sein. Wesentlich ist nur die langgestreckte röhrenförmige Gehäuseform. An einem Ende des Gehäuses angeordnet ist ein Einlass, durch den das zu reinigende Fluid, insbesondere Rohluft, zuführbar ist und am anderen Ende des Gehäuses ist ein Auslass angeordnet, durch den das gereinigte Fluid abführbar ist. Dichtend zwischen Ein- und Auslass ist eine Anordnung von Filtern angeordnet, wobei das Gehäuse zum Filterwechsel eine mit einem Gehäusedeckel dicht verschließbare Öffnung aufweist. In dem röhrenförmigen Gehäuse sind in Strömungsrichtung hintereinander wenigstens ein Vorfilter, ein Hauptfilter und ein damit verbundener Sekundärfilter angeordnet. Bevorzugt liegen diese Filter axial hintereinander in dem rohrförmigen Gehäuse, wodurch der Durchmesser des Gehäuses gering gehalten werden kann, da die verschiedenen Filter von der Strömung in Reihe nacheinander durchströmt werden und die Elemente so nicht ineinander angeordnet sind, welches zu einem größeren Querschnitt führen würde. Jedoch ist bei einem größeren vorhandenen Bauraum auch eine ineinanderliegende konzentrische Anordnung von wenigstens zwei Filterelementen möglich. Die schlanke röhrenförmige Bauweise ergibt den großen Vorteil der Variabilität der Einbausituation, das heißt, dieses Luftfiltersystem kann in beliebiger Lage und an beliebigem Ort korrespondierend zur Brennkraftmaschine verwendet werden. Die Kombination aus Vorfilter, Hauptfilter und Sekundärfilter ergibt eine sehr hohe Abscheideleistung bei gleichzeitiger Sicherheit gegen erhöhten Motorverschieiß durch Feststoffpartikelbelastung bei den unterschiedlichsten Einsatzbedingungen. Ein weiteres Beispiel für die gelungene Variabilität des Systems zeigt sich darin, dass die Anordnung von Ein- und Auslass in Abhängigkeit der Umgebungsanforderungen vorgenommen werden kann. So lässt sich der Einlass entweder an der Stirnseite des Gehäuses oder auch bevorzugt seitlich im oberen Teil des Gehäuses anordnen, wobei der Auslass bevorzugt an der gegenüberliegenden Stirnseite angeordnet ist, jedoch auch problemlos seitlich im Bereich der gegenüberliegenden Stirnseite angeordnet werden kann. Der Gehäusedeckel folgt in seiner Formgebung bevorzugt der äußeren Form des Gehäuses, wodurch ein homogener optisch ansprechender Anblick des Filtersystems geschaffen wird, welches zusätzlich auch den Vorteil einer geringeren Schmutzanfälligkeit bietet, da keine überstehenden Sicken, Ecken oder Kanten vorhanden sind. Der Gehäusedeckel kann dabei im wesentlichen die gesamte Länge des röhrenförmigen Gehäuses abdecken, bevorzugt verschließt er jedoch nur eine Öffnung in Größe des Hauptfilters in der ungefähren Mitte des röhrenförmigen Gehäuses, wobei dann bei herausgenommenem Hauptfilter die Möglichkeit des Wechsels eines weiteren Filters durch dieselbe Öffnung gegeben ist.

Erfindungsgemäß ist der Vorfilter dadurch charakterisiert, dass er durch wenigstens zwei parallele Zyklonabscheider aufgebaut ist, bevorzugt wird hier von einem Zyklonblock mit vielen parallel geschalteten Zyklonzellen ausgegangen. In dieser Konstellation sind Hauptfilter und Sekundärfilter als Rundfilterelemente ausgeführt, wobei die in Strömungsrichtung erste Endscheibe des Hauptfilters verschlossen ist und einen Griff zum Handling des Hauptfilters aufweist und die in Strömungsrichtung zweite Endscheibe des Sekundärfilters, also die Endscheibe, welche dem Auslass zugewandt ist, ist ebenfalls verschlossen. Besonders an dieser Anordnung ist, dass das Sekundärelement nicht wie sonst üblich im Inneren des Hauptfilters angeordnet ist, sondern sich räumlich an den Hauptfilter anschließt und deswegen entgegen der ansonsten üblichen Einbaurichtung eingesetzt ist.

In erfindungsgemäßer Weise sind Hauptfilter und Sekundärfilter derart im Gehäuse angeordnet, dass die durch den Vorfilter vorgereinigte Ansaugluft das Hauptfilterelement von außen nach innen durchströmt und der Sekundärfilter im Anschluss daran von innen nach außen durchströmt ist. Da die in Strömungsrichtung zweite Endscheibe des Sekundärfilters verschlossen ist, bildet sich hier eine Art Sicherheitstasche im Inneren des Sekundärfilters, wodurch sichergestellt ist, dass auch bei Versagen von Vorfilter und Hauptfilter keinerlei Feststoffpartikel und Verschmutzungsteilchen durch den weiteren Ansaugtrakt dem Motor zugeführt werden und diesen schädigen könnten. Im Gegensatz dazu werden die Sekundärelemente aus dem Stand der Technik ebenso wie das Hauptfilterelement von außen nach innen durchströmt und können somit diese zusätzliche Sicherheitsfunktion nicht bieten.

Erfindungsgemäß ist der Hauptfilter im wesentlichen in der axialen Mitte des röhrenförmigen Gehäuses angeordnet und der Sekundärfilter in Strömungsrichtung folgend am Hauptfilter konzentrisch zu diesem angeordnet. Hierzu ist im Gehäuse zwischen den beiden Filtern ein kreisringförmiges Verbindungsprofil zur Verbindung der beiden Filter angeordnet. Dieses kreisringförmiges Verbindungsprofil ist bevorzugt fest mit dem Gehäuse verbunden und dient einerseits der Positionsfestlegung von Hauptfilter und Sekundärelement sowie der Möglichkeit für eine sichere Abdichtung zwischen Roh- und Reinluftseite zu sorgen.

Erfindungsgemäß weist das kreisringförmige Verbindungsprofil Dichtflächen zur radialen Abdichtung von Hauptfilter und Sekundärfilter zur Trennung von Rein- und Rohluftseite und axiale Anschlagflächen zur axialen Endpositionsfestlegung von Haupt- und Sekundärfilter auf. Das kreisringförmige Verbindungsprofil weist dabei in einer Ausgestaltung im Querschnitt ein im wesentlichen U-förmiges Querschnittsprofil auf, wobei der innere axiale Schenkel des U's länger ist, als der äußere und der innere axiale Schenkel an der inneren Fläche noch eine nach innen ragende umlaufende Kante aufweist. Diese Kante dient als Axialanschlag der oberen kreisringförmigen Endscheibe des Sekundärelements und die über der umlaufenden Kante liegende umlaufende Fläche sorgt korrespondierend mit der Endscheibe des Sekundärelementes für eine radiale Abdichtung zwischen Roh- und Reinluftseite. Die zwischen beiden U-Schenkeln liegende Fläche des kreisringförmigen Verbindungsprofils dient zum axialen Anschlag der kreisringförmigen in Strömungsrichtung zweiten Endscheibe des Hauptfilterelementes und die innenliegende Fläche des zweiten U-förmigen Schenkels des Verbindungsprofils dient zur radialen Abdichtung des Hauptfilterelementes zwischen Roh- und Reinluftseite. So werden über das kreisringförmige Verbindungsprofil Hauptfilterelement und Sekundärfilterelement dichtend miteinander verbunden und weiterhin werden hierdurch die Filter im Gehäuse zentriert und axial festgelegt.

Gemäß einer weiteren vorteilhaften Ausgestaltung der Erfindung ist im Anschluss an die wenigstens zwei parallelen Zyklone, die als Vorfilter dienen, im Inneren des Gehäuses ein vom Rest des Innenvolumens des Gehäuses dichtend getrennter Kanal angeordnet, wobei der Kanal im Anschluss an das Gehäuse korrespondierend mit einer Unterdruckwelle verbunden ist, um die durch die Zyklone abgeschiedenen Feststoffpartikel auszutragen. Da die Zyklone in ihrer Eigenart als Vorfilter eine sehr hohe Abscheideleistung haben, muss gewährleistet sein, dass der Feststoffpartikelaustrag durch die Zyklone kontinuierlich abgeführt wird, um nicht zu einer Verstopfung des Systems zu führen. Der ausgetragene Staub und Feststoffpartikelanteil sollte auch nicht mit dem Strömungsrichtung folgendem Hauptfilter und Sekundärfilter in Berührung kommen, da deren Standzeiten drastisch verringert würde. Bevorzugt wird hierbei der Staubaustrag der Zyklone mit einem flexiblen Schlauch verbunden, welcher durch das Gehäuse des Luftfiltersystems hindurchgeführt wird und neben dem Auslass des Luftfiltergehäuses ebenfalls aus dem Gehäuse hinausgeführt wird. Um sicherzustellen, dass sämtliche Staub- und Feststoffpartikei abgeführt werden, wird der Schlauch daraufhin mit einer Unterdruckquelle verbunden oder zum Beispiel an das Abgassystem angeschlossen, wo dann der Unterdruck über ein Venturi-Prinzip erzeugt wird. Es ist jedoch auch möglich, einen separaten Festkanal im Gehäuse zu integrieren, durch den die gesammelten Staub- und Feststoffpartikel der Zyklone ausgetragen werden. Es muss nur die vollkommene Trennung des Zyklonfeststoffauslasses von den folgenden Filterelementen gewährleistet sein.

Bei einer besonderen Ausführungsform weist der Gehäusedeckel Mittel zur Positionsfestlegung, insbesondere eine sich radial nach innen erstreckte Gehäusedeckeleinwölbung, wenigstens eines Filterelementes, auf, wodurch ein Fehleinbau des wenigstens eines Filterelementes und eine Positionsänderung des Filterelementes im Betrieb verhindert wird. Auf diese Art und Weise kann einfach der richtige Einbau von - Sekundärelement und Hauptfilterelement verifiziert werden. Zuerst wird das Sekundärfilterelement durch das Verbindungsprofil hindurchgeführt und findet dort seinen axialen Anschlag und im nächsten Schritt wird das Hauptfilterelement ebenfalls auf das Verbindungsprofil aufgesetzt. Bei einem fehlerhaften Einbau des Sekundärfilterelementes ist es nicht möglich, das Hauptfilterelement positionsgenau einzusetzen. Das Hauptfilterelement erreicht so nicht seinen axialen Endanschlag im Gehäuse und weicht so von seiner vorgegebenen Endposition ab. Bei der Montage des Gehäusedeckels stößt dann die sich nach innen erstreckende Gehäusedeckeleinwölbung gegen den oberen Teil des Hauptfilterelementes und das Gehäuse lässt sich nicht verschließen. So kann nun untrüglich festgestellt werden, ob Sekundärfilterelement und Hauptfilterelement einwandfrei eingesetzt sind. Bei einwandfrei eingesetzten Filterelementen ragt die Gehäusedeckeleinwölbung bei geschlossenem Gehäusedeckel in das Innere des Filtergehäuses und bildet so einen oberen axialen Endanschlag für die mit dem Griffelement versehene Endscheibe des Hauptfilterelementes. Je nach Auslegung der beiden Teile zueinander berühren sich entweder Endscheibe und Gehäusedeckeleinwölbung oder es bleibt ein geringer Luftspalt zwischen beiden Teilen. So lässt sich bei geschlossenem Deckel auch ein vibrationsbedingtes Herauswandern des Hauptfilterelementes aus der vorgegebenen Position vermeiden, dies ist gerade beim Einsatz im landwirtschaftlichen Bereich, in dem es zu starken Vibrationen und äußeren mechanischen Einflüssen kommen kann wichtig. Fakultativ besteht zusätzlich die Möglichkeit, das Hauptfilterelement im oberen Bereich der Endscheibe mit einer geeigneten Vorrichtung im Gehäuse über eine zum Beispiel Schnappverbindung zu fixieren.

Eine besondere Ausführung des Filtersystems besteht darin, dass der Einlass eine in der Größe veränderbarer Einlassöffnung aufweist, wobei die Abscheideleistung des Vorfilters der Größe der Einlassöffnung angepasst ist. Aufgrund der unterschiedlichen Staub- und Schmutzbelastung bei unterschiedlichen Einsatzarten der Nutzfahrzeuge, insbesondere landwirtschaftlichen Fahrzeuge, ist es sinnvoll, die Abscheideleistung des Vorfilters (insbesondere des Zyklonblockes), dem unterschiedlichen Abscheidebedarf anzupassen. Dies erfolgt am einfachsten über die Reduzierung oder Aufstockung der Anzahl der Einzelzyklone im Zyklonblock. Zur Vereinfachung des Filtersystems und zur kostengünstigeren Fertigung bleibt hierbei die im Gehäuse vorhandene Einlassöffnung konstant und über einen Einsatz, welcher in die Einlassöffnung eingesetzt werden kann, lässt sich so eine in der Größe veränderbare Einlassöffnung erzielen. Der nicht benötigte Anteil an Durchströmvolumen wird mit dem Einsatz einfach überdeckt, so dass nur die notwendige Öffnung für die verwendeten Zyklone luftdurchgängig bleibt.

Gemäß einer weiteren Ausgestaltung der Erfindung sind am Gehäuse Mittel zur Aufnahme von Funktionselementen angeordnet, wobei im Inneren des Gehäuses Mittel zur fakultativen Elektrifizierung durch eine außerhalb des Gehäuses angeordnete Stromquelle angeordnet sind. Durch die Schaffung geeigneter, zum Beispiel Flansch-Verbindungen oder Schraubenaufnahmen am Gehäuse, ist es möglich, bestimmte Funktionselemente lösbar mit dem äußeren Teil des Gehäuses zu verbinden. Sofern diese Funktionselemente zur Wahrnehmung ihrer Funktion mit Strom versorgt werden müssen, wird dieser Strom durch im Inneren des Gehäuses verlegte vom Rest des Innenvolumens getrennte Stromleitungen, inklusive Steckern, versorgt. Ebenso lässt sich andenken kleine Schaltrelais oder Steuergeräte zur Ansteuerung der Funktionselemente im Gehäuse anzuordnen. Weiterhin ist es so ganz einfach möglich, Glasfaserkabel zur Daten- und Signalübertragung zu den Funktionselementen zu installieren. Beispielsweise ist hierfür im Gehäuse ein Leerrohr mit entsprechenden Anschlussstellen zu den Funktionselementen oder auch ein fest im Gehäuse integrierter Kanal möglich.

Eine besondere Ausführungsform dieser Erweiterung des Filtersystems sieht vor, dass die Funktionselemente beleuchtungstechnische Anlagen und/oder ein Rückspiegel sind. So lässt sich beispielsweise ein Blinker, das Abblendlicht und / oder Standlicht eines landwirtschaftlichen Fahrzeuges am Gehäuse befestigen oder es ist ebenso möglich, zusätzlich oder einzeln für sich einen Rückspiegel, welcher zum Beispiel zusätzlich noch beheizt ist oder elektrisch verstellbar ist, am Gehäuse zu befestigen und anzuordnen.

Gemäß einer vorteilhaften Weiterbildung der Erfindung ist das Gehäuse aus schleudergegossenem Kunststoff hergestellt. So lässt sich auf einfache und günstige Art und Weise ein großes röhrenförmiges Gehäuse herstellen, wobei das Gewicht trotzdem niedrig bleibt und über die Werkzeugform eine weitgehend freie Gestaltung möglich ist. Durch Integration spezieller Buchsen und Muttern im Herstellungsprozess ist es einfach die Anbindung der Funktionselemente und/oder des Gehäusedeckels zu realisieren.

Eine alternative Ausgestaltung des Filtersystems beinhaltet, dass das Gehäuse überwiegend durch die A-Säule eines Kraftfahrzeuges, insbesondere Nutzfahrzeuges, bevorzugt eines landwirtschaftlichen Fahrzeuges ausgebildet ist. Gerade bei größeren Nutzfahrzeugen bzw. landwirtschaftlichen Fahrzeugen ist der Platz im "Motorraum" sehr gering, so dass Alternativen für die Anbringung des Luftfiltersystems notwendig sind. Dadurch, dass die Filter inklusive Vorfilter in-line, also nacheinander, angeordnet sind und so der Durchmesser des röhrenförmigen Gehäuses nicht überdimensional groß sein muss, lässt sich dieses System bei vielen Fahrzeugen in die A-Säule integrieren. Dabei kann dann die A-Säule selbst einen großen Teil der Gehäusefunktionen übernehmen, wobei die Komplementierung über Gehäusehalbschalen und Gehäusedeckel erfolgt.

Ebenso ist es alternativ bei diesem Konzept möglich, das Gehäuse überwiegend durch Karosserie- und/oder Rahmenbauteile eines Kraftfahrzeuges auszubilden. Da die räumliche Lage des Filtersystems keinen Einfluss auf die Abscheideleistung hat und damit von einer stehenden Anordnung bis zu einer liegenden Anordnung sämtliche Positionen möglich sind, ist es ebenso möglich, das Filtersystem zum Beispiel in einem Dachholm, in Kotflügelteile oder Rahmenbauteile eines Leiterrahmens eines Kraftfahrzeuges zu integrieren. Zur Material- und Platzeinsparung übernehmen dann dort die Karosserieund/oder Rahmenbauteile auch Gehäusefunktionen, wodurch dann nur noch wenige zusätzliche Gehäuseteile notwendig sind, um ein dichtes aber trotzdem von außen zugängliches Filtersystem zu schaffen.

Weiterhin ist es möglich, das Gehäuse des Filtersystems als äußeres frei an der Karosserie eines Kraftfahrzeuges oder an der Brennkraftmaschine desselben anbringbares freistehendes oder liegendes Element auszuführen. So lässt sich das Luftfiltersystem unabhängig von äußeren Vorgaben durch, zum Beispiel die Kabine eines Kraftfahrzeuges, freistehend bevorzugt in Motornähe, zum Beispiel eines landwirtschaftlichen Fahrzeuges, anbringen. Mit der Möglichkeit Funktionselemente, wie zum Beispiel beleuchtungstechnische Anlagen und/oder Rückspiegel am Luftfiltersystem anzubringen, lassen sich weitere vorteilhafte Funktionen in das Luftfiltersystem integrieren. Beispielsweise wird das Luftfiltersystem bei einem landwirtschaftlichen Nutzfahrzeug als stehende Säule spiegelbildlich zum Abgassystem des Fahrzeuges anordnen, wobei eine sehr gute Erreichbarkeit der Filterelemente und eine Luftansaugung mit einem geringen Feststoffpartikelanteil gewährleistet ist.

Eine zweckmäßige Ausbildung des Erfindungsgedankens beinhaltet eine spezielle Ausgestaltung des Hauptfilterelementes zur Verwendung im oben beschriebenen Luftfiltersystem. Dem gemäß ist das Hauptfilterelement ein Rundfilterelement, wobei die in Strömungsrichtung erste Endscheibe verschlossen ist und ein sich axial erstreckendes Griffelement aufweist und die zweite Endscheibe in einer umlaufenden Nut einer radial wirkende elastische Dichtung aufweist, welche korrespondierend an einer radialen Dichtfläche des Verbindungselementes im Gehäuse des Filtersystems dichtend anliegt. Das Hauptfilterelement wird von außen nach innen durchströmt, weswegen die erste Endscheibe dicht verschlossen ist und die zweite Endscheibe hohlzylindrisch ausgeführt ist und eine Abdichtung zwischen Roh- und Reinluftseite gewährleistet. Das Griffelement kann hierbei bevorzugt einer M-förmige Querschnittsform aufweisen, wobei jedoch auch andere Querschnittsformen durchaus zulässig und möglich sind. Die in der umlaufenden Nut der zweiten Endscheibe liegenden, radial wirkende elastische Dichtung kann jedwede im Stand der Technik bekannte Form aufweisen, wobei hier beispielsweise O-Ringe, aufgespritztes Dichtungsmaterial oder ein Polyurethan-Schaum zu nennen sind.

Gemäß einer Weiterbildung des Hauptfilterelementes ist das Filtermedium ein zick-zack-förmig gefaltetes Filterpapiermedium und die Endscheiben bestehen aus einem thermoplastischen Kunststoff, wie zum Beispiel Polyamid oder Polypropylen, wobei die Radialdichtung eine T-förmige Querschnittsform aufweist. Hierbei weist der Fuß des T's radial nach außen und bildet eine Art Dichtlippe, vergleichbar mit einer Scheibenwischerdichtlippe.

Das Sekundärfilterelement für ein oben beschriebenes Filtersystem ist ebenfalls ein Rundfilterelement, wobei die in Strömungsrichtung erste Endscheibe ein sich axial erstreckendes Griffelement aufweist und die zweite Endscheibe verschlossen ist. In der ersten hohlzylindrischen Endscheibe ist in einer umlaufenden Nut eine radial wirkende elastische Dichtung angeordnet, welche korrespondierend an einer radialen Dichtfläche des Verbindungselementes im Gehäuse des Filtersystems dichtend anliegt. Das sich axial erstreckende Griffelement hat bevorzugt die Form eines mit Durchbrüchen versehenen Kragens, wobei im unteren Teil des Kragens die umlaufende Nut angeordnet ist. Die Dichtung, welche in der umlaufenden Nut angebracht ist, kann jede im Stand der Technik bekannte Form aufweisen, so zum Beispiel ein O-Ring sein oder eine eingespritzte Dichtung oder eine Polyurethan-Schaum-Dichtung sein.

Gemäß einer Ausgestaltung des Sekundärelementes ist das Filtermedium des Sekundärfilterelementes ein Filtervlies und die Endscheiben sind aus thermoplastischem Kunststoff, zum Beispiel Polyamid oder Polypropylen. Auch hier weist die Radialdichtung wie bei dem Hauptfilterelement bevorzugt eine T-förmige Querschnittsform auf, wobei die radial nach außen weisende Lippe in der Art einer Scheibenwischerlippe ausgebildet ist. Der untere Teil der umlaufenden Nut weist eine nach Außen stehende umlaufende Kante auf, welche zur Herstellung eines axialen Anschlages im Verbindungsprofil steht. Das erfindungsgemäße Verfahren zur Reinigung von Ansaugluft für eine Brennkraftmaschine mit einem oben beschriebenen Filtersystem weist die folgenden Schritte auf. Die ungereinigte Ansaugluft wird zunächst durch einen Zyklonabscheider angesaugt, wobei hier die Vorabscheidung stattfindet. Die Ansaugluft wird in den Zyklonen in Rotation versetzt und durch die Zentrifugalkraft werden die Feststoffpartikel von der Ansaugluft getrennt. Die aus der Luft abgeschiedenen Partikel werden im Anschluss an die Zyklonabscheider durch eine Leitung, welche durch das röhrenförmige Filtergehäuse verläuft, ausgetragen. Diese Leitung ist mit einer Unterdruckquelle, zum Beispiel durch das Abgassystem über eine Venturi-Düse, verbunden, wodurch die Feststoffpartikel förmlich herausgesaugt werden. Da die Feststoffpartikel nicht mit den darauffolgenden Filtern in Berührung kommen soll, ist die Leitung durch die die Feststoffpartikel ausgetragen werden vom Rest des h-nenvolumens des röhrenförmigen Gehäuses getrennt. Im Anschluss an die Zyklone durchströmt die vorgereinigte Luft das Hauptfilterelement von außen nach innen, um daraufhin anschließend das axial nachfolgende Sekundärfilterelement von innen nach außen zu durchströmen. Im Anschluss an das Sekundärfilterelement wird die dann vollständig gereinigte Ansaugluft der Brennkraftmaschine zugeführt. In vorteilhafter Weise ist das Sekundärfilterelement mit der Strömungsrichtung zweiten Endscheibe verschlossen und kann so eventuell noch vorhandene Feststoffpartikel oder Teilchen auffangen. Ein weiterer Vorteil dieser Anordnung liegt darin, dass bei einem Wechsel des Hauptfilterelements das Sekundärfilterelement eventuell beim Wechsel in das System hineinfallende Schrauben oder ähnliches auffängt und so die Brennkraftmaschine vor Beschädigung schützt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Schnitt durch das erfindungsgemäße Luftfiltersystem,
- Figur 2: ebenfalls einen weiteren Schnitt durch das erfindungsgemäße Luftfiltersystem,
- Figur 3: eine Vergrößerung der Verbindungsstelle zwischen Hauptfilter- und Sekundärfilterelement,
- Figur 4: das Hauptfilterelement im Schnitt und
- Figur 5: zeigt einen Schnitt des Sekundärfilterelementes.

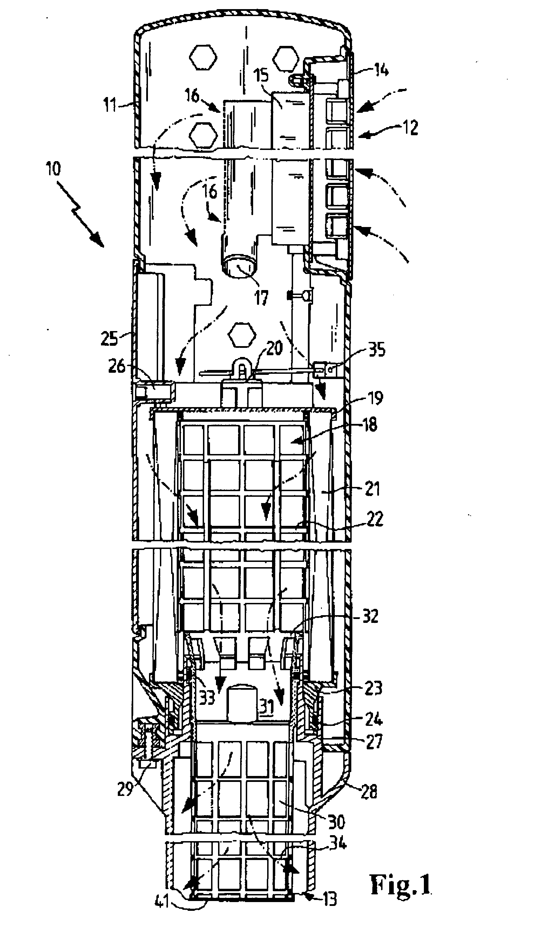

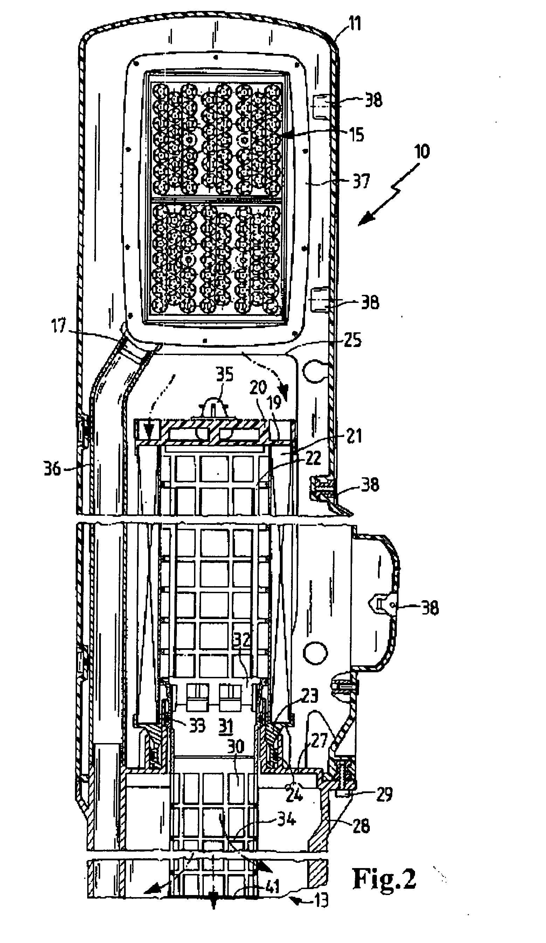

Die Figur 1 zeigt den erfindungsgemäßen Luftfilter 10 mit einem Gehäuse 11, welches einen Einlass 12 und einen Auslass 13 aufweist. Der Auslass 13 ist im weiteren Verlauf hier nicht weiter dargestellt mit dem Ansaugsystem der Brennkraftmaschine verbunden. Der Einlass 12 weist einen Einlassdeckel 14, zum Beispiel in Form einer Gitterstruktur, auf und die Luft strömt entsprechend der Pfeilrichtung direkt in einen Zyklonblock 15. Der Zyklonblock 15 weist einen Luftauslass 16 für die den Zyklonblock 15 durchströmte, nun gereinigte Luft, auf sowie eine Staubaustragsöffnung 17. Der weitere Verlauf des Staubaustrages nach der Staubaustragsöffnung 17 wird in der Figur 2 näher beschrieben und ist in der Figur 1 hier nicht weiter dargestellt. Nach dem Luftauslass 16 strömt die Luft von außen nach innen durch den Hauptfilter 18. Dieser weist eine erste Endscheibe 19 auf, wobei einstückig aus der ersten Endscheibe 19 axial ein Griffelement 20 ausgeformt ist. Mit der ersten Endscheibe 19 ist ein hohlzylindrisches Filtermedium 21 verbunden, welches durch ein innenliegendes Stützrohr 22 unterstützt wird. Filtermedium 21 und Stützrohr 22 sind wiederum in Strömungsrichtung abwärts mit einer zweiten Endscheibe 23 verbunden. Diese weist eine Radialdichtung 24 auf. Der positionsgerechte Einbau des Hauptfilters 18 lässt sich beim Arretieren eines Gehäusedeckels 25 erkennen, da nur bei positionsgerechtem Einbau ein axiales Anschlagelement 26 des Gehäusedeckels 25 oberhalb der ersten Endscheibe 19 radial in das Gehäuse hereinragen kann. Das Hauptfilterelement 18 wird über ein Verbindungsprofil 27 mit einem Flansch 28, welcher über eine Schraubverbindung 29 mit dem Gehäuse 11 verbunden ist, in den Luftfilter 10 eingesetzt und findet so durch das Verbindungsprofil 27 einen axialen Anschlag und Zentrierung. Die Radialdichtung 24 dichtet das Hauptfilterelement 18 mit dem Verbindungsprofil 27 ab. Der Flansch 28 wird im weiteren Verlauf mit dem Ansaugsystem, welches hier nicht weiter dargestellt ist, der Brennkraftmaschine verbunden. Im Anschluss an den Hauptfilter 18 folgt ein Sekundärelement 30 mit einer ersten Endscheibe 31, woraus sich ein Kragen 32 axial in Richtung des Hauptfilterelements 18 erstreckt und der eine Radialdichtung 33 aufweist. Das Sekundärelement 30 weist ebenfalls ein innenliegendes Stützrohr 34 auf und wird mit einer geschlossenen Endscheibe 41 abgeschlossen. Über die Radialdichtung 33 stellt das Sekundärelement 30 ebenfalls eine dichte Verbindung mit dem Verbindungsprofil 27 her. Nach Einbau von Sekundärelement 30 und Hauptfilterelement 18 lassen sich diese über eine Klipsverbindung 35 im Gehäuse 11 arretieren.

Die Figur 2 zeigt eine weitere Schnittdarstellung des erfindungsgemäßen Filtersystems. Der Figur 1 entsprechende Bauteile sind mit den gleichen Bezugszeichen versehen. In dieser Figur ist der Kanal 36 zum Austragen der abgeschiedenen Staub- und Feststoffpartikel aus dem Zyklonblock, welcher außerhalb mit einer Unterdruckquelle verbunden ist, deutlich zu erkennen. Es ist zu sehen, dass die abgeschiedenen Staub- und Feststoffpartikel vollständig vom restlichen Innenraum des Gehäuses 11 durch den Kanal 36 getrennt werden. Ebenfalls ist in dieser Ansicht ein Befestigungsflansch 37 zur Anbringung des Einlassdeckels 14 zu erkennen. Die hier nicht dargestellten Funktionselemente wie zum Beispiel beleuchtungstechnische Anlagen und/oder Spiegel werden an Befestigungspunkten 38, welche über das Gehäuse 11 verteilt sind angebracht. Die Verkabelung für die Elektrifizierung und eventuelle Schalteinheiten oder Steuergeräte erfolgt dann innerhalb des Gehäuses 11.

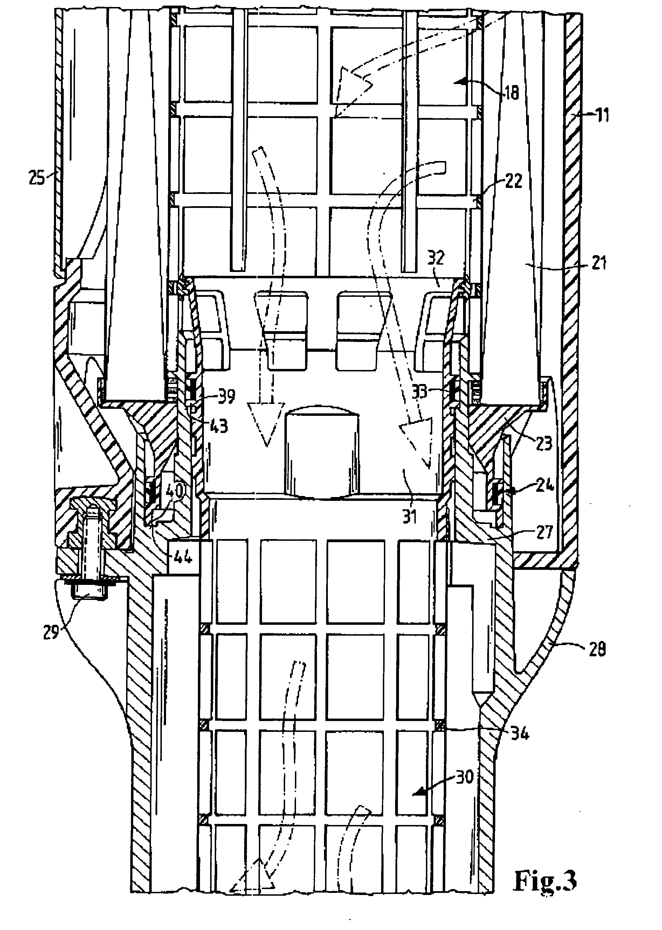

Die Figur 3 zeigt eine Vergrößerung des Verbindungsbereiches zwischen Hauptfilterelement 18 und Sekundärfilterelement 30 im Schnitt. Den Figuren 1 + 2 entsprechende Bauteile sind mit den gleichen Bezugszeichen versehen. In der Vergrößerung ist deutlich die Führung und Anlage von Hauptfilter 18 und Sekundärelement 30 durch das Verbindungsprofil 27 zu erkennen. Beim Zusammenbau wird das Sekundärelement 30 zuerst in die konzentrische Öffnung des Verbindungsprofils 27 eingeführt, wobei im Endbereich die im Kragen 32 des Sekundärelementes 30 integrierte Radialdichtung 33 an einer axialen Wand des Verbindungsprofiles 27 dichtend anliegt. In der axialen Wand des Verbindungsprofils 27 ist eine axiale Anschlagkante 43 angeordnet an der ein axialer Anschlag 39 des Sekundärelementes 30 in der Endposition anliegt und wodurch die axiale Endposition festgelegt wird. Daraufhin wird das Hauptfilterelement 18 in das Gehäuse 11 des Luftfilters 10 eingebracht wobei eine erste Führung und Zentrierung des Hauptfilters 18 durch den sich nach oben verbreiternden Kragen 32 des Sekundärfilterelementes 30 erfolgt. Der Hauptfilter 18 wird über den Kragen 32 hinübergeschoben, wobei daraufhin die Radialdichtung 24 der Endscheibe 23 des Hauptfilterelements 18 an einer weiteren axialen Wand des Verbindungsprofils 27 dichtend anliegt. Auch hier hat das Verbindungsprofil 27 eine axiale Anschlagkante 44, welche in Verbindung mit dem axialen Endanschlag 40 des Hauptfilterelements 18 für eine axiale Festlegung der Endposition sorgt.

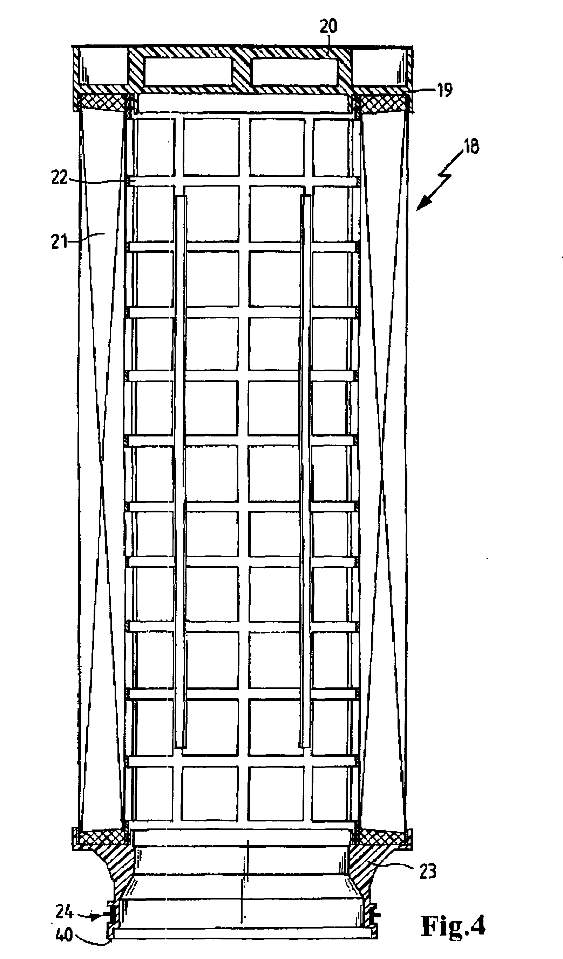

Die Figur 4 zeigt das Hauptfilterelement 18 in einer Schnittdarstellung. Den vorherigen Figuren entsprechende Bauteile sind mit den gleichen Bezugszeichen versehen. Das Hauptfilterelement 18 weist ein zick-zack-förmig gefaltetes Filtermedium 21 auf, welches durch ein im Inneren angeordnetes Stützrohr 22 unterstützt wird. Die Stirnseiten des Filtermediums 21 sind mit Endscheiben 19 und 23 abgeschlossen. Die erste geschlossene Endscheibe 19 weist ein sich axial nach oben erstreckendes Griffelement 20 auf, welches radial nicht über die projizierte Fläche des Filterelementes 18 hinausragt. Die Endscheibe 19 ist einstückig mit dem Griffelement 20 verbunden und unlösbar mit dem Filtermedium 21 und dem Stützrohr 22 verbunden. Dies kann zum Beispiel über Verschweißen oder Verkleben geschehen. Die zweite hohlzylindrische Endscheibe 23, welche ebenso unlösbar mit Filtermedium 21 und Stützrohr 22 verbunden ist, weist einen axialen Endanschlag 40 auf, welcher in Verbindung mit dem Verbindungsprofil 27 zur Positionsfestlegung des Hauptfilterelements 18 dient. Im Bereich des Endanschlags 40 weist die Endscheibe 23 eine umlaufende Nut mit einer darin angelegten Dichtung 24 auf. Die Dichtung weist eine T-förmige Querschnittsform auf, ist einstückig aus einem flexiblen, elastischen Kunststoff hergestellt und der wirksame Bereich der Radialdichtung ist in seiner Funktion mit einer Scheibenwischerlippe zu vergleichen.

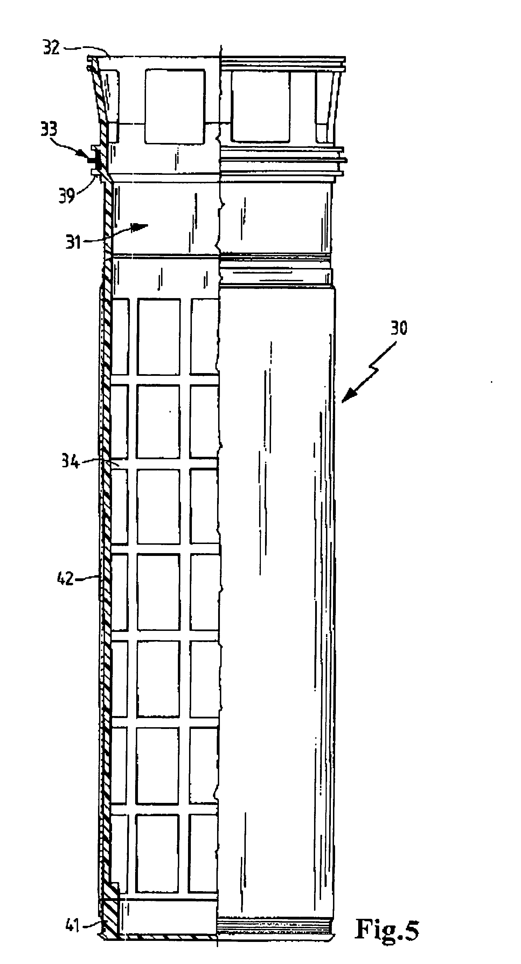

Die Figur 5 zeigt eine Schnittansicht des Sekundärelementes 30. Den vorherigen Figuren entsprechende Bauteile sind mit den gleichen Bezugszeichen versehen. Das Sekundärelement 30 weist als Filtermedium ein Filtervlies 42, welches durch ein innenliegendes Stützrohr 34 unterstützt wird, auf. Das eine Ende des Sekundärfilterelementes 30 ist mit einer Endscheibe 41 dicht verschlossen. Die andere Stirnseite des Sekundärfilterelementes 30 weist eine hohlzylindrische Endscheibe 31 mit einem sich nach oben erstrekkenden Kragen 32 auf. Der Kragen ist durch mehrere Durchbrüche unterbrochen wodurch er auch eine Grifffunktion übernehmen kann. Im mittleren Bereich der Endscheibe 31 ist eine umlaufende Nut angeordnet, welche eine Radialdichtung 33 aufnimmt. Die Radialdichtung 33 hat eine T-förmige Querschnittsform wobei die Dichtwirkung durch die scheibenwischerförmige Lippe erzielt wird. Die untere Kante 39 der umlaufenden Nut dient als Axialanschlag des Sekundärelementes beim Einsetzen in das Verbindungsprofil 27. Diese Kante 39 liegt nach dem richtigen Einsetzen des Sekundärelementes vollständig an der axialen Anschlagkante 43 des Verbindungsprofils 27 an, siehe Figur 3. Das metallfreie Hauptfilterelement und das ebenso metallfreie Sekundärfilterelement sind problemlos zu entsorgen. Filterpapier, Vlies, Kunststoffmittelrohr und -griff, sowie die Kunststoffendscheiben können beispielsweise sehr einfach thermisch entsorgt werden. Durch die spezielle Ausformung der Endscheiben der beiden Filterelemente können diese einfach miteinander kombiniert werden und über das Verbindungsprofil des Gehäuses ihrer Funktion zugeführt werden.

## Patentansprüche

1. Filtersystem zur Filterung von Ansaugluft einer Kraftmaschine, insbesondere Luftfilter
für ein Nutzfahrzeug, mit einem röhrenförmigen Gehäuse (11) einem im Gehäuse ange-ordneten Einlass (12) durch den zu reinigendes Fluid, insbesondere Rohluft, zuführbar ist,
einem im Gehäuse angeordneten Auslass (13) durch den das gereinigte Fluid abführbar ist, einer Anordnung von Filtern, welche dichtend zwischen Einlass und Auslass angeordnet sind, wobei das Gehäuse eine mit einem Gehäusedeckel (25) dichtend verschließbare Öffnung zum Filterwechsel aufweist, wobei im Gehäuse in Strömungsrichtung wenigstens ein Vorfilter (15), ein Hauptfilter (18) und ein Sekundärfilter (30) angeordnet sind, wobei der Hauptfilter ein Rundfilterelement ist und der Sekundärfilter ebenfalls ein Rundfilterelement ist, **dadurch gekennzeichnet, dass** der Vorfilter durch wenigstens zwei parallele Zyklonabscheider aufgebaut ist, und dass die in Strömungsrichtung erste Endscheibe (19) des Hauptfilters verschlossen ist und einen Griff (20) aufweist und die in Strömungsrichtung zweite Endscheibe (41) des Sekundärfilters ebenfalls verschlossen ist, wobei das Hauptfilterelement von außen nach innen durchströmt ist und im Anschluss der Sekundärfilter von innen nach außen durchströmt ist, wobei der Hauptfilter im Wesentlichen in der axialen Mitte des röhrenförmigen Gehäuses angeordnet ist und der Sekundärfilter in Strömungsrichtung folgend am Hauptfilter, konzentrisch zu diesem, angeordnet ist, wobei im Gehäuse zwischen den beiden Filtern ein kreisringförmiges Verbindungsprofil (27) zur Verbindung der beiden Filter (15/18) angeordnet ist, welches Dichtflächen zur radialen Abdichtung von Hauptfilter und Sekundärfilter zur Trennung von Rein- und Rohluftseite und axiale Anschlagflächen zur axialen Endpositionsfestlegung von Hauptfilter und Sekundärfilter aufweist.

2. Filtersystem nach Anspruch 1, **dadurch gekennzeichnet, dass** im Anschluss an die wenigstens zwei parallelen Zyklone im Inneren des Gehäuses ein vom Rest des Innenvolumens des Gehäuses dichtend getrennter Kanal (36) angeordnet ist, wobei der Kanal im Anschluss an das Gehäuse korrespondierend mit einer Unterdruckquelle verbunden ist, um die durch die Zyklone abgeschiedenen Feststoffpartikel auszutragen.

3. Filtersystem nach einem der vorhergehenden Ansprüche, **dadurch gekennzeichnet, dass** der Gehäusedeckel (25) Mittel zur Positionsfestlegung, insbesondere eine sich radial nach innen erstreckende Gehäusedeckeleinwölbung, wenigstens eines Filterelementes aufweist, wodurch ein Fehleinbau des wenigstens einen Filterelementes und eine Positionsänderung des wenigstens einen Filterelementes im Betrieb verhindert wird.

4. Filtersystem nach einem der vorhergehenden Ansprüche, **dadurch gekennzeichnet, dass** der Einlass eine in der Größe veränderbare Einlassöffnung aufweist, wobei die Abscheideleistung des Vorfilters (15) der Größe der Einfassöffnung angepasst ist.

5. Filtersystem nach einem der vorhergehenden Ansprüche, **dadurch gekennzeichnet, dass** am Gehäuse Mittel (38) zur Aufnahme von Funktionselementen angeordnet sind, wobei im Inneren des Gehäuses Mittel zur fakultativen Elektrifizierung durch eine außerhalb des Gehäuses angeordnete Stromquelle angeordnet sind.

6. Filtersystem nach Anspruch 5, **dadurch gekennzeichnet, dass** die Funktionselemente beleuchtungstechnische Anlagen und / oder ein Rückspiegel sind.

7. Filtersystem nach einem der vorhergehenden Ansprüche, **dadurch gekennzeichnet, dass** das Gehäuse aus schleudergegossenem Kunststoff ist.

8. Filtersystem nach einem der Ansprüche 1 bis 6, **dadurch gekennzeichnet, dass** das Gehäuse überwiegend durch die A-Säule eines Kraftfahrzeuges ausgebildet ist.

9. Filtersystem nach einem der Ansprüche 1 bis 6, **dadurch gekennzeichnet, dass** das Gehäuse überwiegend durch Karosserie- und / oder Rahmenbauteile eines Kraftfahrzeuges ausgebildet ist.

10. Filtersystem nach einem der Ansprüche 1 bis 6, **dadurch gekennzeichnet, dass** das Gehäuse als äußeres, frei an der Karosserie eines Kraftfahrzeuges oder an der Brennkraftmaschine desselben anbringbares frei stehendes oder liegendes Element ausgeführt ist.

## Claims

1. Filter system for filtering intake air of an engine, in particular air filter for a commercial vehicle, with a tube-shaped housing (11), an inlet (12) disposed in the housing through which fluid, in particular raw air, to be cleaned can be supplied, an outlet (13) disposed in the housing through which the cleaned fluid can be discharged, an arrangement of filters which are sealingly disposed between inlet and outlet, wherein the housing features an opening that can be sealingly closed with a housing cover (25) for changing the filter, wherein at least one prefilter (15), one main filter (18) and one secondary filter (30) are disposed in flow direction in the housing, wherein the main filter is a round filter element and the secondary filter is also a round filter element, **characterized in that** the prefilter is formed by at least two parallel cyclone separators, and that the first end plate (19) of the main filter in flow direction is closed and features a handle (20) and that the second end plate (41) of the secondary filter in flow direction is also closed, wherein the main filter element is flowed through from the outside to the inside and the secondary filter is flowed through, downstream, from the inside to the outside, wherein the main filter is substantially disposed in the axial center of the tube-shaped housing and the secondary filter is disposed downstream in flow direction at the main filter concentrically in relation to the latter, wherein in the housing between the two filters a circular ring-shaped connecting profile (27) is disposed for connecting the two filters (15) (18) which features sealing surfaces for a radial sealing of main filter and secondary filter for separating clean air and raw air side and axial stop surfaces for defining the final axial position of main filter and secondary filter.

2. Filter system according to claim 1,**characterized in that** a duct (36), sealingly separated from the rest of the inner volume of the housing, is disposed downstream of the at least two parallel cyclones inside the housing, wherein the duct is correspondingly connected downstream of the housing with a vacuum power source in order to discharge the solid particles separated by the cyclones.

3. Filter system according to one of the above claims, **characterized in that** the housing cover (25) features means for defining the position, in particular a vaulted housing cover extending radially inwards, of at least one filter element, so that a wrong installation of the at least one filter element and a position change of the at least one filter element during operation is avoided.

4. Filter system according to one of the above claims, **characterized in that** the inlet features an intake orifice of variable size, wherein the separation performance of the prefilter (15) is adapted to the size of the intake orifice.

5. Filter system according to one of the above claims, **characterized in that** means (38) for receiving functional elements are disposed at the housing, wherein means for a facultative electrification by a current source disposed outside the housing are disposed inside the housing.

6. Filter system according to claim 5, **characterized in that** the functional elements are lighting installations and / or a rear-view mirror.

7. Filter system according to one of the above claims, **characterized in that** the housing is made of synthetic material produced by centrifugal cast.

8. Filter system according to one of the claims 1 to 6, **characterized in that** the housing is mainly formed by the A-pillar of a motor vehicle.

9. Filter system according to one of the claims 1 to 6, **characterized in that** the housing is mainly formed by car body components and / or frame components of a motor vehicle.

10. Filter system according to one of the claims 1 to 6, **characterized in that** the housing is designed as an external element that can be mounted freely, in vertical or horizontal position, at the car body of a motor vehicle or at the internal combustion engine of this motor vehicle.

## Revendications

1. Système de filtre destiné au filtrage d'air d'aspiration d'un moteur, notamment filtre à air pour un véhicule utilitaire, avec un boîtier tubulaire (11), une entrée (12) disposée dans le boîtier à travers laquelle un fluide à nettoyer, notamment de l'air brut, peut être acheminé, une sortie (13) disposée dans le boîtier à travers laquelle le fluide nettoyé peut être évacué, un ensemble de filtres qui sont disposés de façon étanche entre l'entrée et la sortie, le boîtier présentant une ouverture qui peut être obturée de façon étanche avec un couvercle de boîtier (25) pour le changement de filtre, au moins un préfiltre (15), un filtre principal (18) et un filtre secondaire (30) étant disposés dans le sens du flux dans le boîtier, le filtre principal étant un élément de filtre rond et le filtre secondaire étant également un élément de filtre rond, **caractérisé en ce que** le préfiltre est composé d'au moins deux séparateurs à cyclone parallèles et **en ce que** le premier disque d'extrémité (19) dans le sens du flux du filtre principal est fermé et est doté d'une poignée (20) et le deuxième disque d'extrémité (41) dans le sens du flux du filtre secondaire est lui aussi fermé, l'élément de filtre principal étant parcouru par le flux de l'extérieur vers l'intérieur et, en aval, le filtre secondaire étant parcouru par le flux de l'intérieur vers l'extérieur, le filtre principal étant disposé essentiellement au milieu axial du boîtier tubulaire et le filtre secondaire étant disposé, en aval, dans le sens du flux, sur le filtre principal de manière concentrique à ce dernier, un profil de jonction en anneau de cercle (27) étant placé dans le boîtier entre les deux filtres en vue de relier les deux filtres (15) (18) et étant pourvu de surfaces d'étanchéité pour étancher en sens radial le filtre principal et le filtre secondaire et pour séparer le côté d'air pur du côté d'air brut, ainsi que de surfaces de butée pour définir la position finale axiale du filtre principal et du filtre secondaire.

2. Système de filtre selon la revendication 1, **caractérisé en ce qu'**un canal (36) séparé de manière étanche du reste du volume intérieur est disposé en aval des cyclones parallèles, au moins au nombre de deux, à l'intérieur du boîtier, le canal étant relié, en aval du boîtier, de façon correspondante à une source de dépression afin d'évacuer les particules solides séparées par les cyclones.

3. Système de filtre selon l'une des revendications précédentes, **caractérisé en ce que** le couvercle de boîtier (25) présente des moyens de positionnement, notamment une courbure du couvercle de boîtier qui s'étend en sens radial vers l'intérieur, d'au moins un élément filtrant, ce qui empêche un montage incorrect de l'élément filtrant, au moins au nombre d'un, et un changement de position de l'élément filtrant, au moins au nombre d'un, pendant le fonctionnement.

4. Système de filtre selon l'une des revendications précédentes, **caractérisé en ce que** l'entrée présente une ouverture d'admission de taille variable, la capacité de séparation du préfiltre (15) étant adaptée à la taille de l'ouverture d'admission.

5. Système de filtre selon l'une des revendications précédentes, **caractérisé en ce que** le boîtier comporte des moyens (38) permettant de réceptionner des éléments fonctionnels, des moyens d'électrification facultative par une source de courant externe au boîtier étant disposés à l'intérieur du boîtier.

6. Système de filtre selon la revendication 5, **caractérisé en ce que** les éléments fonctionnels sont des installations d'éclairage et/ou un rétroviseur.

7. Système de filtre selon l'une des revendications précédentes, **caractérisé en ce que** le boîtier est réalisé dans une matière plastique obtenue par coulée centrifuge.

8. Système de filtre selon l'une des revendications 1 à 6, **caractérisé en ce que** le boîtier est formé en majeure partie par la colonne A d'un véhicule automobile.

9. Système de filtre selon l'une des revendications 1 à 6, **caractérisé en ce que** le boîtier est formé en majeure partie par des composants de la carrosserie et/ou du châssis d'un véhicule automobile.

10. Système de filtre selon l'une des revendications 1 à 6, **caractérisé en ce que** le boîtier est exécuté en tant qu'élément extérieur pouvant être monté librement, à la verticale ou à l'horizontale, sur la carrosserie d'un véhicule automobile ou sur le moteur à combustion interne de ce véhicule.
